# EUROPEAN PATENT APPLICATION

(11) **EP 0 794 357 A1**
(43) Date of publication of application: **10.09.1997**
(21) Application number: 97101580.5
(22) Date of filing: 01.02.1997
(51) Int. Cl.: F16H 19/02

(54) **Transport apparatus for linearly moving a transport table**

(30) Priority: 06.02.1996 DE 19604204
(71) Applicant: EASTMAN KODAK COMPANY, Rochester, New York 14650 (US); KODAK AKTIENGESELLSCHAFT, D-70323 Stuttgart (DE)
(72) Inventor: Freund, Michael, 70323 Stuttgart (DE)
(74) Representative: Blickle, K. Werner, Dipl.-Ing.

(57) **Abstract**

A highly precise linear transport apparatus consists of a driving motor (6), a clockwise and counter-clockwise rotatable drum (10) driven by said motor and a linearly movable transport table (2) having a first fastening element (4a) and a second fastening element (4b), each of said elements being attached to one end of a flexible, non-stretchable belt (12a, 12b). Two flexible, non-stretchable belts (12a, 12b) are wound around the drum (10). Said belts are axially positioned on the cylindrical surface of the drum (10) and are wound around the drum (10) at least once. The first fastening element (4a) and the second fastening element (4b) are L-shaped elements (22,24). The free ends of the belts (12a, 12b) are attached to the short arms (22b, 24b).

## Description

The invention relates to a transport apparatus for linearly moving a transport table, said apparatus comprising a clockwise or counter-clockwise rotatable drum driven by a motor via a flexible, non-stretchable belt, the free ends of said belt each being attached to fastening elements on the transport table.

US-B1-4,161,004 discloses an apparatus in which a guiding member is moved by means of a motor-driven capstan and a spring belt wound around said capstan. The guiding member is guided by means of bushings on a guiding bar. The length along which the apparatus can be guided is limited by the circumference of the capstan and hence also by the spring belt wound once around the capstan.

DE-A-37 21 651 proposes a device in which the disc-shaped information carrier to be printed on is moved along a straight line. A holding device for the information carrier is connected to two parallel belts which guide both the holding device and the information carrier in a direction perpendicular to the direction of movement of the print head. The belts are each guided via an upper and lower deflection device. A stepper motor, for example, can provide the line-to-line movement in order that the ink jet print head movable perpendicularly to the direction of motion prints the desired image on the information carrier. In this device, however, a slip may arise as a result of which the positioning accuracy is no longer ensured.

A further possibility for a linear transport apparatus is disclosed in EP-A-0 653 751. In this apparatus the drawer of a record player is moved linearly. The drawer has two guide rails one of which takes the form of a rack. A gear wheel connected to a motor engages with the rack so that upon rotation of the motor the drawer makes a linear movement from a closed to an open position (or vice versa). Racks of high accuracy and suitable for long displacement paths are very expensive.

It is the object of the present invention to create a lowcost linear transport apparatus which guarantees a highly precise positioning over long displacement paths.

In accordance with the present invention this object is attained in that an apparatus is provided in which two flexible, non-stretchable belts are fastened at two different axial positions of the drum and are wound around the drum at least once.

The advantage of the linear transport apparatus as envisaged by the present invention is that the rotational movement of the gear-driven motor can be transformed into a highly precise linear movement of the transport apparatus. Two flexible, non-stretchable belts are wound around a drum positioned on a gear wheel of the gear unit. The belts are fastened at two different axial positions on the drum. The free ends of the belts are each connected with a first and a second fastening element respectively to one end each of the transport table. The drum is rotated by the motor (e.g. clockwise) thereby causing one belt to be wound off the drum and the other belt to be correspondingly wound onto the drum. The transport table is always pulled by the belt being wound onto the drum. The belts are connected to fastening elements via spring elements thereby compensating for temperature changes, i.e. the spring elements guarantee tension in the flexible, non-stretchable belts regardless of the thermal expansion of the components of the transport apparatus.

Further advantagous embodiments of the present invention are described in the dependent claims.

The subject matter of the invention will now be described with reference to an embodiment shown in the drawing wherein:
- Fig. 1: represents a schematic view of the transport apparatus as described in the present invention;
- Fig. 2: shows a cross-section of the motorized drum of the transport apparatus as illustrated in Fig. 1, wherein a method of fastening the steel belts likewise is shown;
- Fig. 3: represents a perspective view of an embodiment of the invention for a transport apparatus; and
- Fig. 4: shows a holding device for a disc-shaped information carrier, the transport apparatus shown in Fig. 3 being viewed from the side.

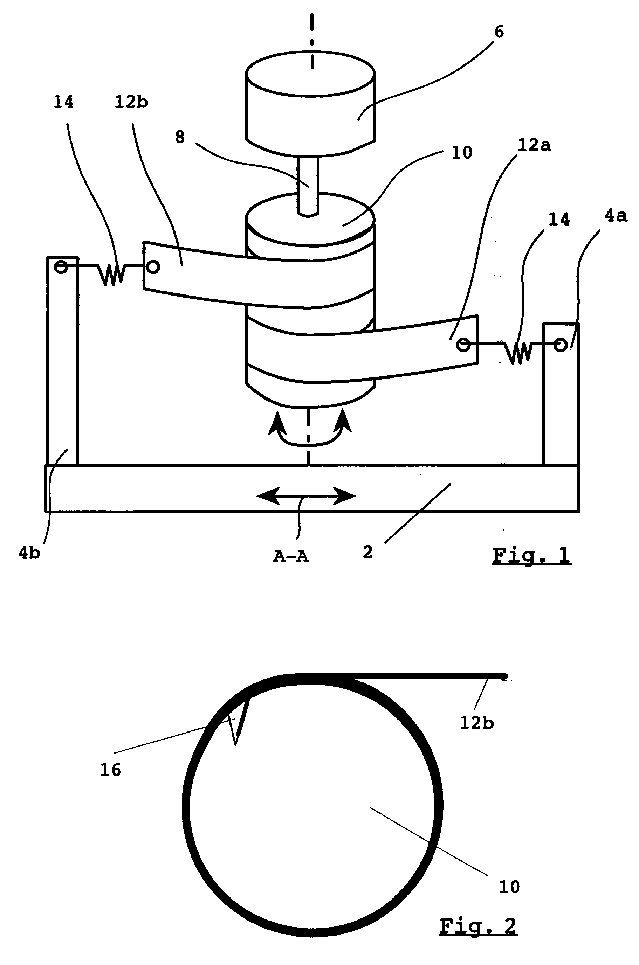

Fig. 1 is a very simplified schematic representation of the transport apparatus according to the invention.

The transport apparatus comprises a transport table 2 which has a first fastening element 4a adjacent to one end of transport table 2 and a second fastening element 4b at the other end of the transport table. The transport table is moved by a driving motor 6 which, via shaft 8, rotates a drum 10 both clockwise and counter-clockwise. A stepper motor, for example, can be used as a driving motor 6. A first flexible, non-stretchable belt 12a and a second flexible, non-stretchable belt 12b are wound around the drum 10, the free ends of said belts each being connected via a spring element 14 to both fastening elements 4a and 4b.

If the drum is rotated clockwise by the motor 6, then the first belt 12a is wound around the cylindrical surface of drum 10 and the second belt 12b is correspondingly wound off. Thus, the rotational motion of the drum 10 is transformed into a translatory movement of the transport table 2 to the left (according to Fig. 1). The direction of the linear movement of the transport table 2 is shown in Fig. 1 by means of the double arrow A-A.

To ensure a sufficiently long transport path, belts 12a and 12b are wound around the drum 10 at least once or several times. A notch 16 in the drum 10 keeps the belts 12a and 12b in place (see Fig.2 which depicts only one of the two belts fastened to the drum 10). Using the notch 16 to keep belts 12a and 12b in position has the advantage that the end of one of the belts 12a and/or 12b attached to the cylindrical housing of the drum does not interfere with the winding on and off of belts 12a and 12b.

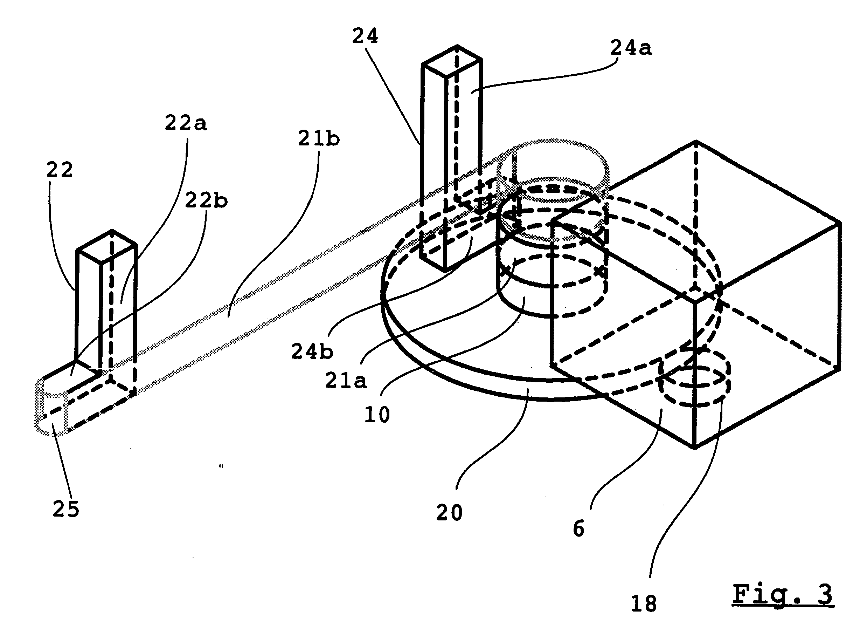

An embodiment of the linear transport apparatus is shown in Fig. 3. For the sake of clarity table 2 has been omitted. The driving motor 6 drives a gear wheel 18 which engages with another gear wheel 20. The drum is axially positioned on the gear wheel 20. In the embodiment shown here, the flexible, non-stretchable belts 12a and 12b are steel belts 21a and 21b respectively and are axially spaced from one another on the drum 10. In the embodiment shown here, the upper steel belt 21b is connected to a first L-shaped arm 22 and the lower steel belt 21a to a second L-shaped arm 24, the latter being at a lesser distance from the gear wheel 20 in the axial distance. The first L-shaped arm 22 consists of a long arm 22a and a short arm 22b. The second L-shaped arm 24 likewise consists of a long arm 24a and a short arm 24b. The two short arms 22b and 24b have essentially the same length and have a rounded edge 25 in the form of a half-cylinder at their free ends. The ends of the steel belts 21 and 21b respectively are wound around the rounded edge 25 and attached to the short arms 22b and 24b respectively, in such a way that the steel belts 21a and 21b when unwound run along the lengths of the short arms 22b and 24b respectively.

The long arms 22a and 24a respectively, are positioned vertically to the short arms 22b and 24b respectively. The long arm 22a of the first L-shaped arm 22 is longer than the long arm 24a of the second L-shaped arm 24. The difference in length between the long arm 22a and the long arm 24a is due to the axial displacement of the steel belts 21a and 21b respectively. However, for a person skilled in the art it is obvious that the long arm 24b of the second L-shaped arm 24 could be longer than the long arm 22a of the first L-shaped arm 22. A nearly guided table 2 can be affixed to the free ends of the long arms 22a and 24a (not shown in Fig. 3).

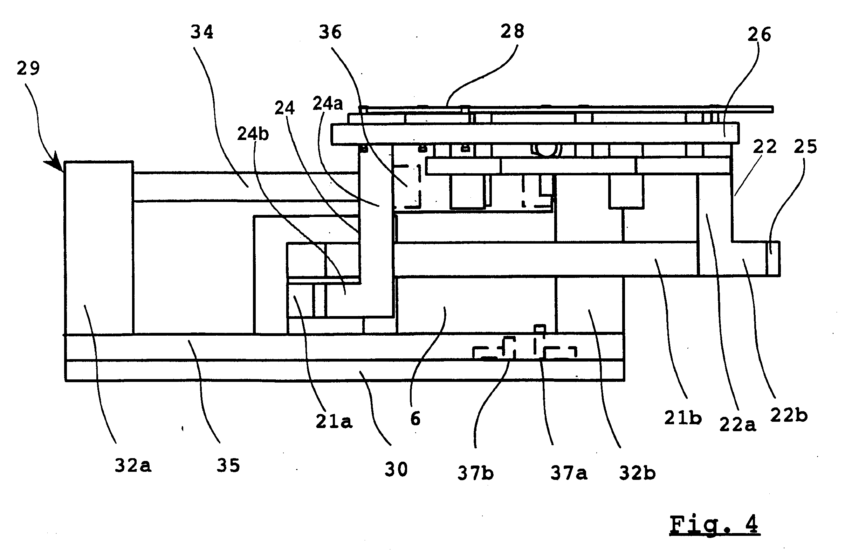

A side view of the transport apparatus disclosed in Fig. 3 is shown in Fig. 4. Here, a clamping device 26 for a disc-shaped information carrier is mounted on the free ends of the long arms 22a and 24a. The clamping device 26 will not be discussed in detail as an automatic clamping device of this type has already been disclosed in the pending patent application DE 195 37 921.7 and a manually operated clamping device has been disclosed in the pending patent application DE 195 32 110.3. A guiding device 29 for the transport apparatus consists of a base plate 30 to which a first holding element 32a and a second holding element 32b are attached. The two holding elements 32a and 32b hold a guiding cylinder 34 and a guide rail 35 for the clamping device 26. Said clamping device 26 has at least one bushing 36 which surrounds the guiding cylinder 34. In addition, the stepper motor 6 which drives the rotatable drum 10 is attached to the base plate 30. In Fig. 4, the second steel belt 21b is almost completely unwound from the rotatable drum 10 as a result of which the clamping device 26 is displaced to the right (according to Fig. 4). A first stop 37a and a second stop 37b are attached to the base plate 30 both of which operate together with extensions (not shown) of the clamping device thereby limiting the transport path of the clamping device 26.

In order to arrive at a sufficiently long transport path along which the clamping device 26 for the disc-shaped information carrier 28 can be moved the steel belts 21a and 21b are given an appropriate length and a thickness of approximately 0.1 mm. The steel belts 21a and 21b are wound twice around the drum 10 which has a radius of 11.22 mm.

The spring elements 14 used to compensate for temperature changes are so designed that the steel belts 21a and 21b are under constant tension regardless of the lengthwise expansion of the parts employed in the transport apparatus. A sufficient resolution of the position accuracy is attained when the ratio of the driving gear wheel 18 to the gear wheel 20 is one to five. If this ratio is assured then one step of the driving motor 6 will amount to exactly 1.8 degrees. In this way errors produced by the driving motor 6 (stepper motor) itself are reduced. The error in position accuracy amounts to ± 10 µm.

An ink printing device (not shown) is positioned above the surface of the information carrier to be printed on. The print head of said printing device moves vertically to the direction of motion of the information carrier. In order to avoid the formation of stripes on the picture printed on the information carrier, the position accuracy of the transport apparatus must be greater than ± 15µm.

The present invention has been described with reference to a preferred embodiment; however, it is obvious that a person skilled in the art may carry out modifications or variations without departing from the scope of the following claims.

### Reference list

- 2: transport table
- 4a: first fastening element
- 4b: second fastening element
- 6: driving motor
- 8: shaft
- 10: rotatable drum
- 12a: first belt
- 12b: second belt
- 14: spring element
- 16: notch
- 18: driving gear wheel
- 20: gear wheel
- 21a: first steel belt
- 21b: second steel belt
- 22: first L-shaped fastening element
- 22a: long arm 22b short arm
- 24: second L-shaped fastening element
- 24a: long arm
- 24b: short arm
- 25: rounded edge
- 26: clamping device
- 28: disc-shaped information carrier
- 29: guide element
- 30: base plate
- 32a: first holding element
- 32b: second holding element
- 34: guide cylinder
- 35: guide rail
- 36: bushing
- 37a: first stop
- 37b: second stop A-A direction of movement of the table

## Claims

1. Transport apparatus for linearly moving a transport table (2), said apparatus comprising a clockwise and counter-clockwise rotatable drum (10) driven by a motor (6) via a flexible, non-stretchable belt, the free ends of said belts each being attached to fastening elements (4a and 4b) on the transport table (2), characterized in that two flexible, non-stretchable belts (12a, 12b) are fastened at two different axial positions of the drum (10) and are wound around the drum (10) at least once.

2. Transport apparatus according to Claim 1, characterized in that the flexible, non-stretchable belts (12a, 12b) are fixed in a notch (16) arranged on the cylindrical surface of the drum (10).

3. Transport apparatus according to Claim 1, characterized in that the flexible, non-stretchable belts (12a, 12b) are connected via a spring element (14) to the first and second fastening element (4a,4b) and in that the spring element (14) is designed in such a way that it compensates for changes in the length of the transport apparatus caused by variations in temperature.

4. Transport apparatus according to any of Claims 1 to 3, characterized in that the flexible, non-stretchable belts (12a, 12b) are steel belts.

5. Transport apparatus according to any of Claims 1 to 4, characterized in that the position accuracy of the transport apparatus is ± 10 micrometers (µm).

6. Transport apparatus according to any of Claims in 1 to 5, characterized in that the transport apparatus is used in a printing device for the printing of disc-shaped information carriers.

7. Transport apparatus according to Claim 6 , characterized in that the transport table has a clamping device (26) for the disc-shaped information carriers and the transport apparatus moves the information carrier under a print head moving orthogonally to the transport direction (A-A) of the transport apparatus.
